# EUROPÄISCHE PATENTSCHRIFT

(11) **EP 4 242 482 B1**
(45) Veröffentlichungstag und Bekanntmachung des Hinweises auf die Patenterteilung: **08.01.2025**
(21) Anmeldenummer: 22160542.1
(22) Anmeldetag: 07.03.2022
(51) Int. Cl.: F16C 19/10, F16C 35/067, E02F 9/12

(54) **BAUMASCHINE**
CONSTRUCTION MACHINE
MACHINE DE CONSTRUCTION

(43) Veröffentlichungstag der Anmeldung: 13.09.2023
(73) Patentinhaber: ABI Anlagentechnik-Baumaschinen-Industriebedarf Maschinenfabrik und Vertriebsgesellschaft mbH, 63843 Niedernberg (DE)
(72) Erfinder: KLEIBL, Albrecht, 63762 Großostheim (DE); HEICHEL, Christian, 63843 Niedernberg (DE)
(74) Vertreter: Patentanwälte Dörner & Kötter PartG mbB

(56) Entgegenhaltungen:
- EP-A2- 1 077 306
- EP-B1- 0 082 991
- DE-A1- 2 508 001
- DE-A1- 3 244 153
- DE-C2- 3 723 554
- GB-A- 800 428
- US-A- 2 513 726
- US-A- 3 061 389
- US-A- 3 985 406
- US-A- 4 161 344
- US-A- 4 239 305
- US-A- 4 248 488
- US-A- 4 395 140
- US-A- 4 463 995
- US-A- 4 582 436
- US-A- 4 592 667
- US-A- 4 622 860
- US-A1- 2007 207 663
- US-A1- 2016 010 694
- US-B2- 7 413 092

## Beschreibung

Die Erfindung betrifft eine Baumaschine, insbesondere eine Spezialtiefbaumaschine nach dem Oberbegriff des Patentanspruchs 1.

Baumaschinen wie Krane und Bagger, aber insbesondere auch Spezialtiefbaumaschinen wie Ramm- oder Bohrgeräte weisen einen Oberwagen auf, der drehbar mit einem Unterwagen verbunden ist. Der Oberwagen trägt bei Spezialtiefbaumaschinen einen senkrechten Mast, den sogenannten Mäkler, an dem Arbeitsgeräte wie Bohrantriebe oder Vibratoren verfahren werden. Der Unterwagen weist üblicherweise ein Kettenfahrwerk, gelegentlich auch ein Radfahrwerk auf, über das die Baumaschine verfahrbar ist. Der Oberwagen ist über einen Drehkranz mit dem Unterwagen drehbar verbunden. Hierdurch kann der Mäkler ohne Verfahren des Unterwagens in verschiedene Positionen verbracht werden.

Aufgabe des Drehkranzes ist neben der Drehverbindung die Übertragung des Antriebsmoments (bei Bohrgeräten), die Übertragung von vertikalen und horizontalen Lasten, sowie auch die Übertragung eines Kippmoments, das beispielsweise aus einer vertikalen Druck- oder Zugkraft außerhalb der Drehachse resultiert.

Drehkränze bestehen üblicherweise aus einem Wälzlager, dessen Lagerringe mit den beiden drehbar zu verbindenden Baugruppen verschraubt sind. Für die Verschraubung werden - je nach Zugänglichkeit - entweder Sechskantschrauben verwendet, oder Gewindebolzen, auf die eine Gewindemutter aufgeschraubt wird. Ein solcher Drehkranz für eine Baumaschine ist beispielsweise in der EP 0 082 991 B1 offenbart.

Wesentlich für die Drehverbindung ist das maximal übertragbare Kippmoment. Dieses hängt im Wesentlichen ab von der statischen Auflast, der Belastbarkeit des Wälzlagers und der Schraubverbindung, über welche die Lagerringe mit den beiden Baugruppen verschraubt sind. Je nach Belastung wird das maximale Kippmoment durch Wälzlagerkennlinien oder durch die Schraubenkennlinien begrenzt. Im Gegensatz zu Kranen, die sich mit der Last drehen und bei denen das maximale Kippmoment während der Bewegung wirkt, tritt das maximale Kippmoment bei Ramm- und Bohrgeräten auf, wenn diese Geräte Lasten aus dem Boden ziehen. Dieses geschieht immer in konstanter Drehposition. Das heißt, es wird nur gezogen, wenn sich die Drehverbindung nicht dreht. Dreht sich die Drehverbindung, wird nicht gezogen. Demzufolge wird bei Spezialtiefbaugeräten zur Auslegung der Drehverbindung die statische Kennlinie des Wälzlagers herangezogen. Diese Kennlinie liegt oberhalb der für Krane gültigen Kennlinien. Bei Spezialtiefbaumaschinen wird das maximale Kippmoment tendenziell eher durch die Schraubenkennlinie der Schraubenverbindungen begrenzt.

Während sich die Wälzlagertechnik im Laufe der Jahre immer weiterentwickelt hat, wodurch verfügbare Drehverbindungen eine zunehmend höhere Lagerbelastbarkeit aufweisen, sind die Schraubenkennlinien unverändert geblieben. Eine Erhöhung des maximalen Kippmoments ist daher im Wesentlichen nur durch die Verwendung größerer Schrauben sowie einer Erhöhung der Anzahl von eingesetzten Schrauben und/oder durch eine Vergrößerung der Teilkreisdurchmesser ermöglicht.

Spezialtiefbaumaschinen müssen regelmäßig zu Baustellen transportiert werden, weshalb den Transportabmessungen der Maschinen Grenzen gesetzt sind. Überschreiten die Transportabmessungen, insbesondere Breite und Höhe der Baumaschinen diese Grenzen, sind aufwändige Genehmigungsverfahren erforderlich, die zeit- und kostenintensiv sind und die Flexibilität deutlich beeinträchtigen. Zur Reduzierung der Transportbreite sind die Unterwagen regelmäßig mit Kettenfahrwerken ausgerüstet, die meistens teleskopierbar sind und für den Transport auf eine kleinste Breite eingefahren werden. Zur Optimierung der Transporthöhe ist der Drehkranz zumeist zwischen den Ketten angeordnet. Die Größe des einsetzbaren Drehkranzes ist daher durch den Abstand zwischen den Ketten limitiert. Da ein größerer Durchmesser des Drehkranzes die Transportabmessungen der Baumaschine vergrößern würde, ist eine Erhöhung der für eine höhere Anzahl von Schrauben erforderlichen Befestigungsfläche aus Platzgründen nicht möglich. Hierbei ist auch zu berücksichtigen, dass der Einsatz größerer Schrauben in der Regel auch größere Werkzeuge zum Anziehen der Schrauben erfordert, wodurch der minimale Abstand zwischen den Schrauben vergrößert ist. Der erforderliche Schraubenabstand ergibt sich aus dem Eckenmaß des Schraubenkopfes und dem Außendurchmesser des Anziehwerkzeugs auf der benachbarten Schraube. Als weitere Alternative zur Erzielung einer größeren Schraubenvorspannkraft kommen höherfeste Schrauben infrage. Die Steigung der Vorspannkraft ist jedoch begrenzt. Darüber hinaus steigt hierbei die Sprödbruchgefahr.

Hier will die Erfindung Abhilfe schaffen. Der Erfindung liegt die Aufgabe zugrunde, eine Baumaschine, insbesondere Spezialtiefbaumaschine bereitzustellen, die bei gleichbleibendem Teilkreisdurchmesser des Drehkranzes ein höheres maximales Kippmoment ermöglicht. Gemäß der Erfindung wird diese Aufgabe durch eine Baumaschine mit den Merkmalen des kennzeichnenden Teils des Patentanspruchs 1 gelöst.

Mit der Erfindung ist eine Baumaschine, insbesondere Spezialtiefbaumaschine bereitgestellt, die bei gleichbleibendem Teilkreisdurchmesser des Drehkranzes ein höheres maximales Kippmoment ermöglicht. Dadurch, dass die Werkzeugeingriffe von wenigstens zwei benachbarten Schraubverbindungen axial versetzt zueinander angeordnet sind, ist ein minimaler Abstand zwischen den Schraubverbindungen ermöglicht, wodurch die Anzahl der eingesetzten Schraubverbindungen auf der verfügbaren Verbindungsfläche erhöht ist, wodurch eine Erhöhung des maximalen Kippmoments erzielt ist. Die Schraubverbindungen umfassen jeweils einen Schraubbolzen, auf den ein Spannkörper angeordnet ist, der den Werkzeugeingriff aufweist.

Grundgedanke der vorliegenden Erfindung ist es, die Dichte angeordneter Schrauben bzw. Schraubverbindungen durch unterschiedliche axiale Anordnungen der Werkzeugeingriffe der Schraubverbindungen, insbesondere der Spannkörper zu erhöhen. Als Spannkörper werden an dieser Stelle diejenigen Körper verstanden, die gegen eine Gegenlage, insbesondere eine Dehnhülse, einen Lagerring oder den Ringdom des Unterwagens verspannt werden. Beim Einsatz von Sechskantschrauben ist der Spannkörper durch den Schraubenkopf gebildet, an dem einstückig ein Schraubbolzen in Form des Gewindeschaftes vorhanden ist. Beim Einsatz von Schraubbolzen ist der Spannkörper durch eine auf den Schraubbolzen aufgeschraubte Mutter oder Schaftmutter gebildet.

In vorteilhafter Ausgestaltung der Erfindung wird zunächst eine Anzahl von ersten Schraubverbindungen in Form von Schrauben (oder Schraubbolzen) in einem ausreichend großen Abstand zueinander positioniert, um einen mühelosen Schraubwerkzeugeingriff zum Anziehen der Schraube (oder einer Mutter) zu ermöglichen. Nachfolgend wird eine Anzahl von zweiten Schraubverbindungen in Form von Schrauben (oder Schraubbolzen) zwischen den ersten Schrauben (oder Schraubbolzen) positioniert. Dabei werden auf die zweiten Schrauben (oder Schraubbolzen) längere Dehnhülsen aufgeschoben, als auf die ersten Schrauben (oder Schraubbolzen), wodurch der Schraubenkopf (oder die Mutter) der zweiten Schrauben (oder Schraubbolzen) axial über den Schraubenköpfen (oder Muttern) der ersten Schrauben (oder Schraubbolzen) angeordnet sind. Hierdurch können die zweiten Schrauben bzw. Schraubbolzen sehr nah an die ersten Schrauben bzw. Schraubbolzen positioniert werden, ohne dass der für den Schraubwerkzeugeingriff erforderliche Raum durch die Schraubenköpfe (oder Muttern) der ersten Schrauben (oder Schraubbolzen) beeinträchtigt ist. Der gleiche Effekt ist bei Verwendung von Dehnhülsen gleicher Länge erzielbar, indem die Schraubendurchführungen für die ersten Schrauben mit einer Einsenkung versehen sind, wodurch die zugeordneten Dehnhülsen bereichsweise versenkt werden.

Dehnhülsen haben die Aufgabe, in dynamisch beanspruchten Schraubverbindungen die Nachgiebigkeit einer Schraube zu steigern, das Spannungsverhältnis zu verbessern und damit die Zeit- oder Dauerfestigkeit der Schraubverbindung zu erhöhen. Schrauben, die in einem Schraubenverband angeordnet sind und gleich belastet werden, sollten mit möglichst gleichen Einbaubedingungen montiert werden. Das gilt besonders für die Klemmlänge der Schrauben. Durch Dehnhülsen mit unterschiedlichem Durchmesser und/oder Senkungen des Gewindes kann sichergestellt werden, dass die Klemmlänge bzw. die Nachgiebigkeit aller Schrauben annähernd gleich sind.

Die Muttern oder Schaftmuttern können einen eingeformten Werkzeugeingriff aufweisen, bspw. in Form einer Sechskantmutter. Sie können in einer weiteren Ausgestaltung der Erfindung auch mit einem axial angestellten Verlängerungskragen versehen sein, der den Werkzeugeingriff aufweist. Auf diese Weise können auf eine Anzahl beabstandet zueinander angeordneter Gewindebolzen zunächst erste Muttern oder Schaftmuttern ohne Verlängerungskragen auf jeden zweiten Gewindebolzen aufgeschraubt werden, wonach auf die verbleibenden Gewindebolzen zweite, einen Verlängerungskragen aufweisende Muttern aufgeschraubt werden können. Da der in dem Verlängerungskragen positionierte Werkzeugeingriff sich auch bei festgezogener Mutter oberhalb der ersten Mutter befindet, können die Abstände zwischen den Gewindebolzen geringer gewählt werden, ohne dass der Eingriff eines Schraubwerkzeuges in den Werkzeugeingriff der zweiten Muttern behindert wird.

In Ausgestaltung der Erfindung sind der Spannkörper und die Dehnhülse einteilig durch eine auf einem Schraubbolzen aufgeschraubte Schaftmutter gebildet. Hierbei handelt es sich um spezielle Muttern, bei denen das Innengewinde in einem zylindrischen Teil eingebracht ist, an den sich ein gewindefreies Schaftteil anschließt. Anstelle des Einsatzes unterschiedlich langer Dehnhülsen können ersatzweise auch unterschiedlich lange Schaftmuttern verbaut werden. Solche Schaftmuttern haben gegenüber der in Stand der Technik verwendeten Kombination einer Mutter mit einer Dehnhülse den Vorteil, dass aufgrund der einteiligen Ausgestaltung kein Spalt vorhanden ist, wodurch Setzungserscheinungen vermindert sind.

In Weiterbildung der Erfindung ist wenigstens ein Lagerring über eine kreisförmige Anordnung von Schraubbolzen mit dem Oberwagen oder dem Unterwagen verbunden, deren Spannkörper abwechselnd axial versetzt zueinander angeordnet sind. Hierdurch ist eine einreihige Verschraubung bei engen Platzverhältnissen bei gleichzeitiger Maximierung der Schraubenanzahl erzielt.

In weiterer Ausgestaltung der Erfindung ist wenigstens ein Lagerring über auf wenigstens zwei konzentrisch zueinander liegenden Teilkreisen angeordnete-Schraubbolzen mit dem Oberwagen oder dem Unterwagen verbunden, wobei die auf einem ersten Teilkreis angeordneten Schraubbolzen jeweils versetzt zwischen zwei auf einem benachbarten Teilkreis angeordneten Schraubbolzen positioniert sind, wobei die Dehnhülsen und die Schaftmutternschäfte der auf dem ersten Teilkreis angeordneten Schraubbolzen eine gegenüber den Dehnhülsen und den Schaftmutternschäften der auf dem zweiten Teilkreis angeordneten Schraubbolzen eine geringere Länge aufweisen und/oder versenkt angeordnet sind, wodurch die Spannkörper der auf dem ersten Teilkreis angeordneten Schraubbolzen axial versetzt zu den Spannkörpern der auf dem zweiten Teilkreis angeordneten Schraubbolzen sind. Hierdurch ist eine raumoptimierte Anordnung zweier kreisbogenförmiger Anordnungen von Schrauben erzielt.

Alternativ können auf den auf einem ersten Teilkreis angeordneten Schraubbolzen aufgeschraubte Muttern oder Schaftmuttern auch mit einem Verlängerungskragen versehen sein, der den Werkzeugeingriff aufweist, wobei der Verlängerungskragen derart ausgebildet ist, dass dessen Werkzeugeingriff bei fest angezogener Mutter die Muttern der auf einem benachbarten zweiten Teilkreis angeordneten Schraubbolzen überragt. Der Verlängerungskragen kann für eine weitere Raumoptimierung einen gegenüber der Mutter geringeren Außendurchmesser aufweisen.

In weiterer Ausgestaltung der Erfindung besteht einer der beiden Teilkreise aus zwei diametral zueinander angeordneten Teilkreisbögen, die jeweils einen Winkel von zwischen 50° und 30°, bevorzugt zwischen 45° und 35° umspannen, wobei einer der Teilkreisbögen auf der dem Mäkler zugewandten Seite angeordnet ist. Eine solche Anordnung einer auf einem zweiten Teilkreisbogen angeordneten Schraubenreihe bietet sich gezielt bei Ramm- oder Bohrgeräten an, da hier die maximalen Kippmomente auf der Mäklerseite, bzw. der diesem gegenüberliegenden Seite des Drehkranzes auftreten. An diesen Stellen kann die maximal mögliche Belastung durch die Positionierung einer zweiten Schraubenreihe erhöht werden. Bevorzugt weisen die Dehnhülsen jeweils auf einem Teilkreis angeordneter Schraubbolzen eine identische Länge auf.

Der Erfindung liegt weiterhin die Aufgabe zugrunde, ein Verfahren zur drehbaren Verbindung eines Oberwagens mit dem Unterwagen einer Baumaschine, insbesondere Spezialtiefbaumaschine bereitzustellen, das bei gleichbleibendem Teilkreisdurchmesser des Drehkranzes ein höheres maximales Kippmoment ermöglicht. Gemäß der Erfindung wird diese Aufgabe durch ein Verfahren mit den Merkmalen des Patentanspruchs 15 gelöst. Hierbei ist die Verwendung von einen Schraubenkopf aufweisenden Schrauben und/oder von Schraubbolzen mit auf diese aufzuschraubenden Muttern oder Schaftmuttern vorgesehen.

Bei Verwendung von Schrauben wird zunächst eine erste Anzahl erster Schrauben mit einer ersten Dehnhülse versehen und nachfolgend durch Drehen des Schraubenkopfes festgeschraubt. Nachfolgend wird eine Anzahl zweiter Schrauben mit einer zweiten Dehnhülse versehen und nachfolgend durch Drehen des Schraubenkopfes festgeschraubt, wobei entweder die ersten Dehnhülsen um wenigstens eine Schraubenkopfbreite kürzer sind, als die zweiten Dehnhülsen oder die ersten und zweiten Dehnhülsen eine identische Länge aufweisen und die ersten Dehnhülsen um wenigstens eine Schraubenkopfbreite gegenüber den zweiten Dehnhülsen versenkt werden.

Bei Verwendung von auf Schraubbolzen aufzuschraubenden Muttern werden analog erste und zweite Dehnhülsen auf eine erste und zweite Anzahl von zuvor eingeschraubten Schraubbolzen aufgebracht und sodann werden die Muttern aufgeschraubt, wobei wiederum entweder die ersten Dehnhülsen um wenigstens eine Mutternbreite kürzer sind, als die zweiten Dehnhülsen oder die ersten und zweiten Dehnhülsen eine identische Länge aufweisen und die ersten Dehnhülsen um wenigstens eine Mutternbreite gegenüber den zweiten Dehnhülsen versenkt werden oder die zweiten Muttern einen Verlängerungskragen aufweisen, der die ersten Muttern (die ebenfalls einen - kürzeren - Verlängerungskragen aufweisen können) mit seinem Werkzeugeingriff überragt.

Die Verwendung von Schaftmuttern erfolgt in gleicher Weise, wobei jedoch keine Dehnhülsen verwendet werden, sondern Schaftmuttern mit unterschiedlichen Schaftlängen, wobei entweder die Schäfte der ersten Schaftmuttern um wenigstens eine Mutternbreite kürzer sind, als die Schäfte der zweiten Schaftmuttern oder die Schäfte der ersten und zweiten Schaftmuttern eine identische Länge aufweisen und die Schäfte der ersten Schaftmuttern um wenigstens eine Mutternbreite gegenüber den Schäften der zweiten Schaftmuttern versenkt werden. Die Breite der Mutter einer Schaftmutter ist vorliegend die Breite des Mutternabschnitts der Schaftmutter (Schaftmutter ohne Schaft). Ebenfalls ist die Verwendung von ersten und zweiten Schaftmuttern mit Schäften gleicher Länge vorgesehen, wobei die zweiten Schaftmuttern einen Verlängerungskragen aufweisen, der den Mutternabschnitt der ersten Schaftmuttern (die ebenfalls einen - kürzeren - Verlängerungskragen aufweisen können) mit seinem Werkzeugeingriff überragt.

In Weiterbildung der Erfindung wird ein erster Lagerring, vorzugsweise der äu-βere Lagerring, mit dem Unterwagen derart verschraubt, dass zunächst Schraubbolzen auf einer Kreisbahn in diesen Lagerring eingeschraubt werden, auf jeden zweiten Schraubbolzen eine ersten Dehnhülse aufgeschoben und nachfolgend eine erste Mutter aufgeschraubt oder eine erste Schaftmutter aufgeschraubt und festgezogen wird, anschließend auf die übrigen Schraubbolzen eine zweite Dehnhülse aufgeschoben und nachfolgend eine zweite Mutter aufgeschraubt oder eine zweite Schaftmutter aufgeschraubt und festgezogen wird, wobei entweder die zweiten Dehnhülsen und die Schäfte der zweiten Schaftmuttern wenigstens um eine Mutternbreite länger sind, als die ersten Dehnhülsen oder die Schäfte der ersten Schaftmuttern, oder die zweiten Muttern und Schaftmuttern einen Verlängerungskragen aufweisen, dessen Werkzeugeingriff die ersten Muttern und Schaftmuttern, die einen Verlängerungskragen geringerer Länge aufweisen können, überragt. Hierdurch ist eine größere Anzahl an Schraubbolzen auf der Kreisbahn positionierbar, ohne dass eine räumliche Behinderung des eingesetzten Schraubwerkzeuges vorliegt.

In Ausgestaltung der Erfindung weist der Unterwagen einen Ringdom auf, mit dem der erste, bevorzugt der äußere Lagerring verschraubt wird. Hierdurch ist eine Fixierung lediglich des Außenrings des Drehkranzes an dem Unterwagen ermöglicht, wobei eine gute Zugänglichkeit der anzuziehenden Schrauben oder Muttern gegeben ist.

In weiterer Ausgestaltung der Erfindung wird der zweite der Lagerringe, vorzugsweise der innere Lagerring, mit dem Oberwagen derart verschraubt, dass zunächst erste Sechskantschrauben mit ersten Dehnhülsen versehen werden und auf einer ersten Kreisbahn durch den Lagerring in den Oberwagen eingeschraubt und festgezogen werden, wonach zweite Sechskantschrauben mit zweiten Dehnhülsen versehen werden und jeweils zwischen zwei ersten Sechskantschrauben auf einer zweiten, konzentrisch zur ersten verlaufenden Kreisbahn beabstandet zueinander durch den zweiten Lagerring in den Oberwagen eingeschraubt und festgezogen werden, wobei die zweiten Dehnhülsen wenigstens um eine Schraubenkopfbreite länger sind, als die ersten Dehnhülsen. Hierdurch kann die zweite Kreisbahn nahe an der ersten Kreisbahn positioniert werden, ohne dass die Werkzeugzugänglichkeit der ersten und zweiten Schrauben beeinträchtigt ist.

In Weiterbildung der Erfindung sind die Sechskantschrauben auf der ersten oder der zweiten Kreisbahn nur auf zwei diametral gegenüberliegend angeordneten Teilkreisbahnen angeordnet, wobei die beiden Teilkreisbahnen einen identischen Winkel umspannen, der vorzugsweise kleiner gleich 110°, insbesondere zwischen 90° und 80° beträgt. Hierdurch ist eine Verringerung der Anzahl der eingesetzten Schrauben ohne Beeinträchtigung des maximalen Kippmomentes der Baumaschine ermöglicht.

Andere Weiterbildungen und Ausgestaltungen der Erfindung sind in den übrigen Unteransprüchen angegeben. Ein Ausführungsbeispiel der Erfindung ist in den Zeichnungen dargestellt und wird nachfolgend im Einzelnen beschrieben. Es zeigen:
- Figur 1: die schematische Darstellung eines Bohrgerätes;
- Figur 2: die räumliche Darstellung des Drehkranzes des Bohrgerätes aus Figur 1;
- Figur 3: die Darstellung des Drehkranzes aus Figur 2 im Querschnitt;
- Figur 4: die Darstellung des Drehkranzes aus Figur 2 in der Vorderansicht;
- Figur 5: die Darstellung des Drehkranzes aus Figur 2 in einer weiteren Schnittdarstellung;
- Figur 6: die Detailansicht aus Ausschnitts VI des Drehkranzes aus Figur 5;
- Figur 7: die schematische Darstellung zweier benachbarter Schraubbolzen mit Schaftmuttern
a) in der Seitenansicht;
b) im Längsschnitt;
- Figur 8: die schematische Darstellung zweier benachbarter Schraubbolzen mit Schaftmuttern mit axial angestellten Verlängerungskragen
a) in der Seitenansicht;
b) im Längsschnitt;
c) in der Draufsicht
- Figur 9: die schematische Darstellung einer Schaftmutter der Anordnung aus Figur 8
a) in der Seitenansicht;
b) im Längsschnitt;
- Figur 10: die Darstellung des Drehkranzes aus Figur 2 in der Draufsicht und
- Figur 11: die schematische Darstellung der Lager- und Schraubenkennlinen verschiedener Lagerausführungen und Schraubenanordnungen.

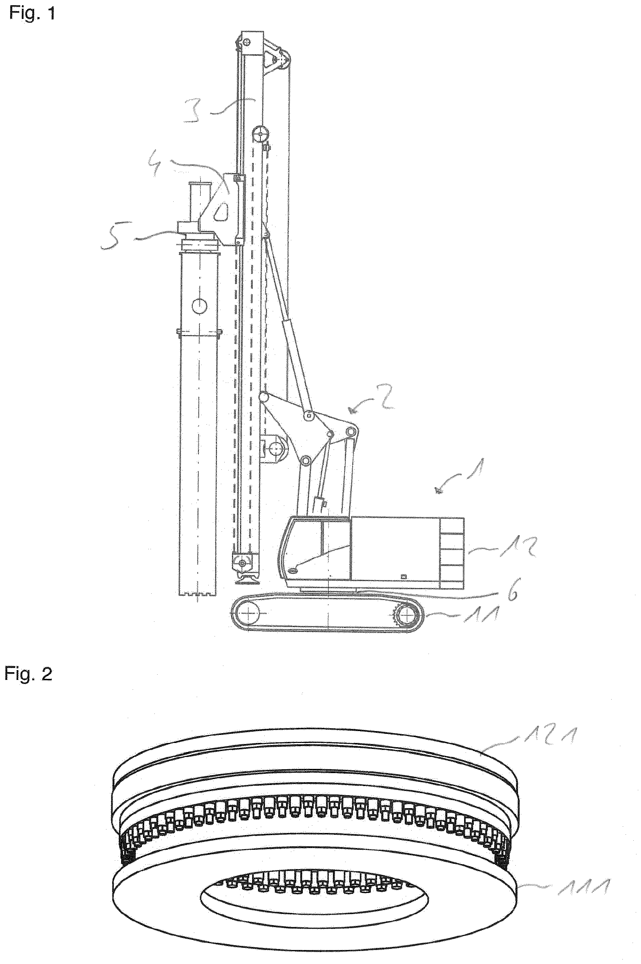

Das als Ausführungsbeispiel gewählte Bohrgerät umfasst ein Trägergerät 1, mit einem ein Kettenfahrwerk aufweisenden Unterwagen 11 und einem Oberwagen 12, der über eine Kinematik 2 mit einem Mäkler 3 verbunden ist, an dem ein Schlitten 4 zur Aufnahme eines Arbeitsgerätes 5 verschiebbar geführt ist. Im Ausführungsbeispiel gemäß Figur 1 ist das Arbeitsgerät 5 ein Bohrtisch. Der grundsätzliche Aufbau einer solchen Drehbohranlage ist allgemein bekannt und beispielsweise auch in der DE 195 14 288 A1 beschrieben.

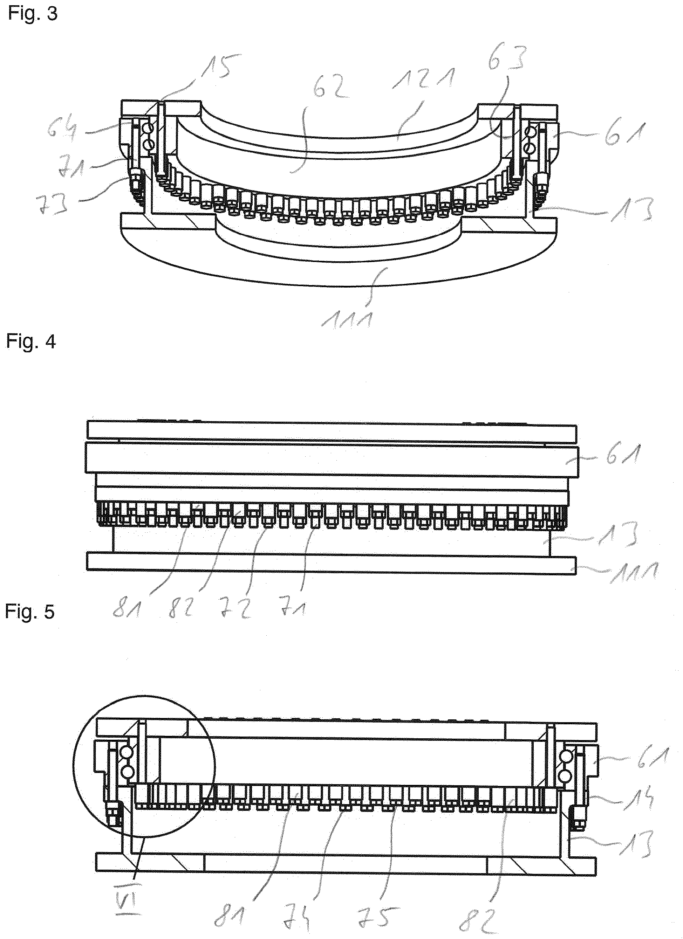

Der Unterwagen 11 ist mit dem Oberwagen 12 über einen Drehkranz 6 drehbar verbunden. Der Drehkranz 6 ist als Wälzlager ausgebildet und umfasst einen Außenring 61 und einen Innenring 62, zwischen denen - nicht dargestellte - Wälzkörper angeordnet sind. Der Außenring 61 ist mit einer - ebenfalls nicht dargestellten - Verzahnung zum Eingriff eines Zahnrades eines Drehantriebs versehen. Der Außenring 61 des Drehkranzes 6 ist mit einem hierzu an dem Unterwagen 1 angeordneten Ringdom 13 verschraubt, während der Innenring 62 mit dem Oberwagen 12 verschraubt ist. In den Figuren 2 bis 6 ist jeweils schematisch die Unterwagenplatte 111 des Unterwagens 11 sowie die Oberwagenplatte 121 des Oberwagens 12 dargestellt, die mit dem Drehkranz 6 verschraubt sind.

Die Verschraubung des Außenrings 61 des Drehkranzes 6 mit dem Ringdom 13 der Unterwagenplatte 111 erfolgt im Ausführungsbeispiel über Schraubbolzen 71, 72 die in den Außenring 61 auf einem Kreisbogen eingeschraubt sind und durch hierzu in dem Ringdom 13 vorgesehene Bohrungen 14 geführt sind, auf dem der Außenring 61 aufliegt. Auf jeden zweiten Schraubbolzen 72 ist zunächst nach Aufbringen einer kurzen Dehnhülse 81 eine Mutter 73 aufgeschraubt und festgezogen. Nachfolgend ist auf die verbleibenden ersten Schraubbolzen 71 nach Aufbringen einer langen Dehnhülse 82 eine Mutter 73 aufgeschraubt und festgezogen. Durch Verwendung der längeren Dehnhülsen 82 ist für die gegen diese verspannten Muttern 73 ausreichend Raum zum Ansetzen eines Schraubwerkzeugs vorhanden.

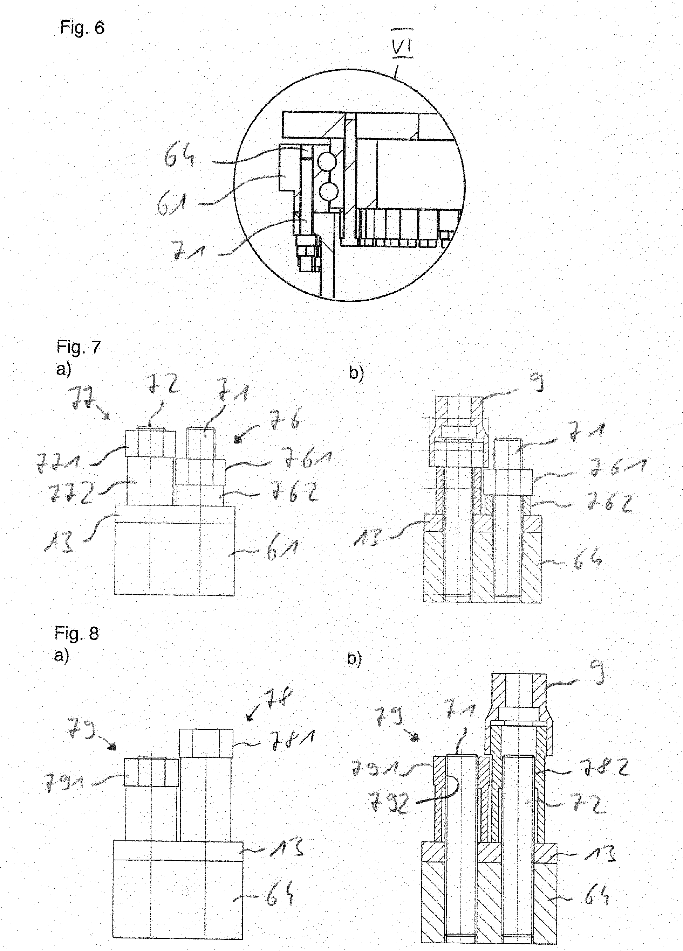

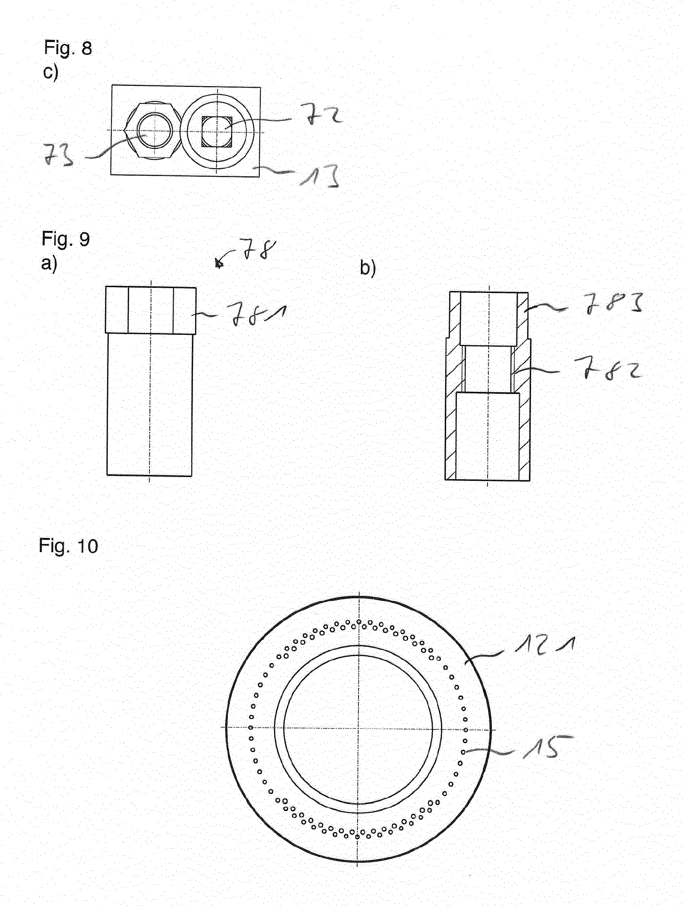

Die Verschraubung des Innenrings 62 mit der Oberwagenplatte 121 des Oberwagens 12 erfolgt über eine erste Gruppe äußerer Sechskantschrauben 74, die durch in dem Innenring 62 entlang eines äußeren umlaufenden Kreisbogens angeordnete Durchbohrungen 63 geführt sind und in entsprechend in der Oberwagenplatte 111 hierzu angeordnete Gewindebohrungen 15 eingeschraubt sind. Zusätzlich sind zwei Gruppen innerer Sechskantschrauben 75 auf zwei diametral gegenüberliegenden, inneren, einen Winkel von 90° umspannenden Kreisbögen angeordnet. Dabei sind die inneren Sechskantschrauben 75 jeweils zwischen zwei äußeren Sechskantschrauben 74 angeordnet. Im Ausführungsbeispiel sind die inneren Sechskantschrauben 75 mit kurzen Dehnhülsen 81 und die äußeren Sechskantschrauben 74 mit langen Dehnhülsen 82 versehen. Folglich werden hier zunächst die inneren Sechskantschrauben 75 angezogen und nachfolgend die äußeren Sechskantschrauben 74, deren Schraubenkopf axial über den Schraubenköpfen der inneren Sechskantschrauben 75 angeordnet sind. In Figur 8 ist die Anordnung der Gewindebohrungen 15 der Oberwagenplatte 111 des Oberwagens 11 dargestellt.

In Figur 7 ist schematisch eine Ausführungsform einer Befestigung mittels Schraubbolzen gezeigt, in der im Gegensatz zu der vorstehend beschriebenen Anordnung von Dehnhülse und Mutter zur Befestigung des Außenrings Schaftmuttern 76, 77 mit einem Mutternabschnitt 761, 771 und einem an diesen anschließenden Schaft 762, 772 vorgesehen. Dabei ist zunächst auf jeden zweiten Schraubbolzen 72 eine Schaftmutter 76 mit kurzem Schaft 762 aufgeschraubt und festgezogen. Nachfolgend ist auf die verbleibenden ersten Schraubbolzen 71 jeweils eine Schaftmutter 77 mit langem Schaft 772 aufgeschraubt und festgezogen. Wie in Figur 7 b) angedeutet ist hierdurch trotz des geringen Abstands zwischen den Schraubbolzen das Ansetzen eines Schraubwerkzeugs 9 ohne weiteres möglich.

Figur 8 zeigt diese Befestigung mittels Schraubbolzen 71, 72 mit Schaftmuttern 78, 79 in einer weiteren Ausführungsform. Diese Schaftmuttern 78, 79 sind au-ßen jeweils mit einem Sechskant 781, 792 als Werkzeugeingriff versehen, der axial in unterschiedlichen Positionen angeordnet ist. Innen weisen die Schaftmuttern 78, 79 in gleicher Position einen Innengewindeabschnitt 782, 792 zum Aufschrauben auf einen Schraubbolzen auf. Hierdurch ist bei einer der beiden Schaftmuttern 78 oberhalb des Innengewindeabschnitts 782 ein Verlängerungskragen 783 gebildet, an dem der als Werkzeugeingriff dienende Sechskant 781 angeordnet ist. Wie in Figur 8 b) angedeutet ist auch hier bei einem geringen Abstand zwischen den Schraubbolzen das Ansetzen eines Schraubwerkzeugs 9 ohne weiteres möglich. Der Bereich unterhalb des Innengewindeabschnitts 782, 792 der Schaftmuttern 78, 79 übernimmt die Funktion einer Dehnhülse.

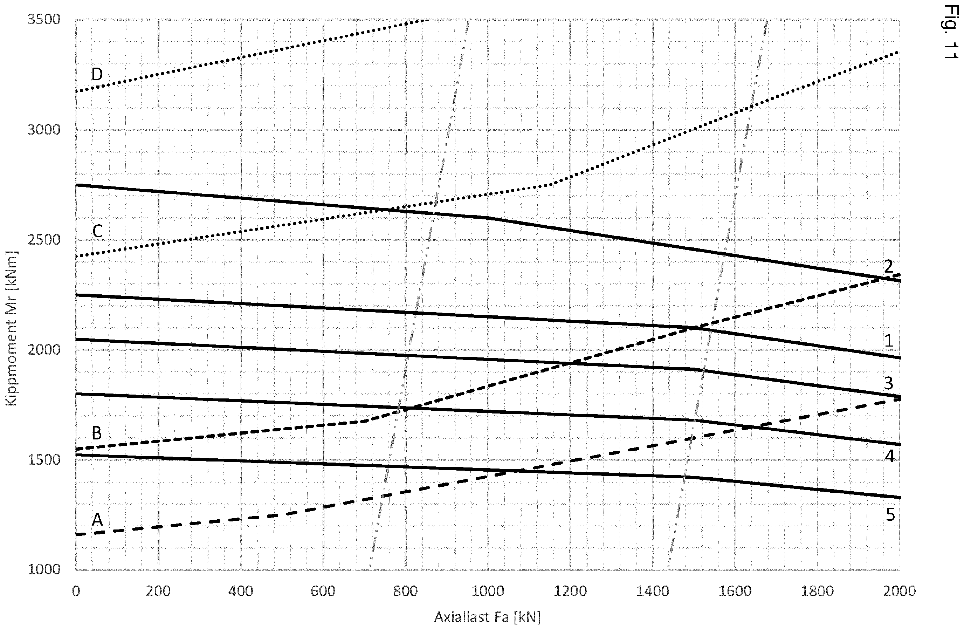

In Figur 11 sind die bei Spezialtiefbaumaschinen relevanten Lagerkennlinien 1 bis 5 eines üblicherweise eingesetzten Drehkranzes dargestellt. Folgende Kennlinien sind gezeigt:

| | |
|---|---|
| Kennlinie 1: | Max. statische Lasten, inkl. Stöße und Beiwerte (kein Schwenken) für herkömmliche Lagerauslegung (Stand 1980) |
| Kennlinie 2: | Max. statische Lasten, inkl. Stöße und Beiwerte (kein Schwenken) für moderne Lagerauslegung (modernes Wälzlager) |
| Kennlinie 3: | Max. Betriebsbelastung inkl. 25% Hublasterhöhung (Mobilkran) |
| Kennlinie 4: | Max. Betriebsbelastung inkl. 25% Hublasterhöhung (Seilbagger) |
| Kennlinie 5: | Max. Betriebsbelastung (Greiferbetrieb bzw. Magnetumschlag) |

Weiterhin sind folgende Schraubenkennlinien für einen diesen Drehkranz bezogen auf 70% Vorspannkraft und einem Anziehfaktor A=1,6 in aufgetragen:

| | |
|---|---|
| Kennlinie A: | 60 Schrauben M22 Festigkeitsklasse 8.8 (Innenring), (herkömmliche Schraubenanordnung) |
| Kennlinie B: | 60 Schrauben M22 Festigkeitsklasse 10.9 (Innenring), (herkömmliche Schraubenanordnung) |
| Kennlinie C: | 90 Schrauben M22 Festigkeitsklasse 10.9 (Außenring), (erfindungsgemäße Schraubenanordnung) |
| Kennlinie D: | 120 Schrauben M22 Festigkeitsklasse 10.9 (Innenring), (erfindungsgemäße Schraubenanordnung) |

Das für Spezialtiefbaugeräte, insbesondere Bohr- und Rammgeräte relevante Anwendungsgebiet ist durch Strich-Punkt-Punkt-Linien gekennzeichnet.

Wie unmittelbar aus dem Diagramm ersichtlich ist, werden mit der erfindungsgemäßen Verschraubung deutlich höhere Schraubenkennlinien erzielt, wodurch ein sinnvoller Einsatz auch moderner, lastoptimierter Drehkränze bei Spezialtiefbaugeräten wie Ramm- oder Bohrgeräten ermöglicht ist.

## Patentansprüche

1. Baumaschine, insbesondere Spezialtiefbaumaschine, mit einem Oberwagen (12) , der einen Mäkler (3) trägt, an dem ein Schlitten (4) zur Aufnahme eines Arbeitsgerätes verfahrbar angeordnet ist, wobei der Oberwagen (12), über einen Drehkranz (6) drehbar mit einem Unterwagen (11) verbunden ist, wobei der Drehkranz (6) zwei Lagerringe, nämlich einen Außenring (61) und einen Innenring (62) umfasst, zwischen denen Wälzkörper angeordnet sind, wobei einer der Lagerringe (61, 62) über kreisbogenförmig angeordnete Schraubverbindungen mit dem Oberwagen (12) und der andere Lagerring über kreisbogenförmig angeordnete Schraubverbindungen mit dem Unterwagen (11) verbunden ist, wobei die Schraubverbindungen jeweils ein Verschraubungsmittel mit einem Werkzeugeingriff zum Festziehen der Schraubverbindung mit einem Werkzeug aufweisen, **dadurch gekennzeichnet, dass** die Werkzeugeingriffe von wenigstens zwei benachbarten Schraubverbindungen eines Lagerrings (61, 62) axial versetzt zueinander angeordnet sind, wobei die Schraubverbindungen jeweils einen Schraubbolzen umfassen, auf dem ein Spannkörper angeordnet ist, der den Werkzeugeingriff aufweist.

2. Baumaschine nach Anspruch 1, **dadurch gekennzeichnet, dass** wenigstens ein Lagerring (61, 62) über eine kreisringförmige Anordnung von Schraubverbindungen mit dem Oberwagen oder dem Unterwagen verbunden ist, deren Werkzeugeingriffe abwechselnd axial versetzt zueinander angeordnet sind.

3. Baumaschine nach Anspruch 2, **dadurch gekennzeichnet, dass** die auf den Schraubbolzen angeordneten, den Werkzeugeingriff aufweisenden Spannkörper, abwechselnd axial versetzt zueinander angeordnet sind.

4. Baumaschine nach einem der vorgenannten Ansprüche, **dadurch gekennzeichnet, dass** wenigstens ein Spannkörper ein an einem Schraubbolzen einer Schraube (74, 75) einstückig vorhandener Schraubenkopf oder eine auf einen Schraubbolzen (71, 72) aufgeschraubte Mutter (73) ist, wobei auf die Schraubbolzen jeweils eine Dehnhülse (81, 82) aufgeschoben ist, gegen die der Spannkörper verspannt ist.

5. Baumaschine nach Anspruch 2 bis 4, **dadurch gekennzeichnet, dass** wenigstens ein Spannkörper eine auf einen Schraubbolzen aufgeschraubte Schaftmutter ist.

6. Baumaschine nach einem der Ansprüche 2 bis 5, **dadurch gekennzeichnet, dass** wenigstens ein Spannkörper eine auf einen Schraubbolzen aufgeschraubte Mutter oder Schaftmutter ist, wobei die Mutter oder Schaftmutter einen axial angestellten Verlängerungskragen umfasst, der den Werkzeugeingriff aufweist.

7. Baumaschine nach einem oder mehreren der Ansprüche 4 sowie 5 und 6, soweit diese auf den Anspruch 4 rückbezogen sind, **dadurch gekennzeichnet, dass** die Dehnhülsen (81, 82) bzw. Schaftmutternschäfte wenigstens zweier benachbarter Schraubbolzen eine unterschiedliche Länge aufweisen und/oder unterschiedlich versenkt angeordnet sind und/oder dass die Verlängerungskragen zweier benachbarter Muttern oder Schaftmuttern eine unterschiedliche Länge aufweisen.

8. Baumaschine nach Anspruch 7, **dadurch gekennzeichnet, dass** der äußere Lagerring (61) über Schraubbolzen (71, 72) mit aufgeschraubter Mutter (73) und Dehnhülse und/oder über Schraubbolzen (71, 72) mit aufgeschraubter Schaftmutter mit dem Unterwagen verschraubt ist.

9. Baumaschine nach einem der Ansprüche 4 bis 8, **dadurch gekennzeichnet, dass** wenigstens ein Lagerring (62) über auf wenigstens zwei konzentrisch zueinander liegenden Teilkreisen angeordnete Schraubbolzen mit dem Oberwagen oder dem Unterwagen verbunden ist, wobei die auf einem ersten Teilkreis angeordneten Schraubbolzen jeweils versetzt zwischen zwei auf einem benachbarten zweiten Teilkreis angeordneten Schraubbolzen positioniert sind, wobei die Dehnhülsen (81) und die Schaftmutternschäfte der auf dem ersten Teilkreis angeordneten Schraubbolzen eine gegenüber den Dehnhülsen (82) und den Schaftmutternschäften der auf dem zweiten Teilkreis angeordneten Schraubbolzen eine geringere Länge aufweisen und/oder versenkt angeordnet sind, wodurch die Spannkörper der auf dem ersten Teilkreis angeordneten Schraubbolzen axial versetzt zu den Spannkörpern der auf dem zweiten Teilkreis angeordneten Schraubbolzen sind.

10. Baumaschine nach einem der Ansprüche 4 bis 9, **dadurch gekennzeichnet, dass** wenigstens ein Lagerring (62) über wenigstens zwei konzentrisch zueinander kreisbogenförmig angeordneten Schraubbolzen mit dem Oberwagen oder dem Unterwagen verbunden ist, wobei die Schraubbolzen einer ersten kreisbogenförmigen Anordnung jeweils versetzt zwischen zwei Schraubbolzen einer zweiten, zu dieser benachbarten kreisbogenförmigen Anordnung positioniert sind, wobei die Muttern und die Schaftmuttern der der auf dem ersten Teilkreis angeordneten Schraubbolzen erste Verlängerungskragen aufweisen, die gegenüber dem Verlängerungskragen der Muttern und Schaftmuttern der der auf dem zweiten Teilkreis angeordneten Schraubbolzen eine geringere Länge aufweisen, wodurch die Werkzeugeingriffe der Muttern und Schaftmuttern der auf dem ersten Teilkreis angeordneten Schraubbolzen axial versetzt zu den Werkzeugeingriffen der Muttern und Schaftmuttern der auf dem zweiten Teilkreis angeordneten Schraubbolzen angeordnet sind.

11. Baumaschine nach einem der Ansprüche 8 bis 10, **dadurch gekennzeichnet, dass** der innere Lagerring (62) über Maschinenschrauben (74, 75) mit dem Oberwagen verschraubt ist.

12. Baumaschine nach einem der Ansprüche 9 bis 11, **dadurch gekennzeichnet, dass** eine der beiden Teilkreise aus zwei diametral zueinander angeordneten Teilkreisbögen besteht, die jeweils einen Winkel von zwischen 50° und 30°, bevorzugt zwischen 45° und 35° umspannen.

13. Baumaschine nach Anspruch 12, **dadurch gekennzeichnet, dass** die beiden Teilkreisbögen einen identischen Winkel umspannen.

14. Baumaschine nach einem der Ansprüche 9 bis 13, **dadurch gekennzeichnet, dass** die Dehnhülsen (81, 82) und Schaftmutternschäfte jeweils auf einem Teilkreis angeordneter Schraubbolzen eine identische Länge aufweisen.

15. Verfahren zur drehbaren Verbindung eines Oberwagens mit dem Unterwagen einer Baumaschine über einen Drehkranz, der einen inneren Lagerring und einen äußeren Lagerring aufweist, wobei einer der Lagerringe über kreisbogenförmig angeordnete Schraubbolzen mit dem Oberwagen (12) und der andere Lagerring über kreisbogenförmig angeordnete Schraubbolzen oder Schrauben mit dem Unterwagen (11) verschraubt wird, wobei auf den Schraubbolzen jeweils ein einen Werkzeugeingriff aufweisender Spannkörper angeordnet ist, **dadurch gekennzeichnet, dass** zunächst der Schraubbolzen einer Anzahl erster Schrauben mit jeweils einer ersten Dehnhülse versehen und nachfolgend durch Drehen des Schraubenkopfes festgeschraubt wird
und/oder eine Anzahl erster Schraubbolzen eingeschraubt, jeweils mit einer ersten Dehnhülse versehen wird und nachfolgend eine erste Mutter aufgeschraubt wird
und/oder eine Anzahl erster Schraubbolzen eingeschraubt und nachfolgend einer erste Schaftmutter aufgeschraubt und festgezogen wird,
und nachfolgend der Schraubbolzen einer Anzahl zweiter Schrauben mit jeweils einer zweiten Dehnhülse versehen und nachfolgend durch Drehen des Schraubenkopfes festgeschraubt wird
und/oder eine Anzahl zweiter Schraubbolzen eingeschraubt, jeweils mit einer zweiten Dehnhülse versehen wird und nachfolgend eine zweite Mutter aufgeschraubt wird
und/oder eine Anzahl zweiter Schraubbolzen eingeschraubt und nachfolgend eine zweite Schaftmutter aufgeschraubt und festgezogen wird,
wobei entweder die ersten Dehnhülsen und die Schäfte der ersten Schaftmuttern um wenigstens einen Schraubenkopfbreite oder Mutternbreite kürzer sind, als die zweiten Dehnhülsen und die Schäfte der zweiten Schaftmuttern
oder wobei die ersten und die zweiten Dehnhülsen sowie die Schäfte der ersten und zweiten Schaftmuttern eine identische Länge aufweisen und entweder die ersten Dehnhülsen und die Schäfte der ersten Schaftmuttern um wenigstens eine Schraubenkopfbreite oder Mutternbreite gegenüber den zweiten Dehnhülsen und den Schäften der zweiten Schaftmuttern versenkt werden oder die zweiten Muttern oder Schaftmuttern einen Verlängerungskragen aufweisen, der die ersten Muttern, die einen Verlängerungskragen aufweisen können, mit ihrem Werkzeugeingriff axial überragen.

16. Verfahren nach Anspruch 15, **dadurch gekennzeichnet, dass** ein erster Lagerring mit dem Unterwagen derart verschraubt wird, dass zunächst Schraubbolzen auf einer Kreisbahn in diesen Lagerring eingeschraubt werden, auf jeden zweiten Schraubbolzen eine ersten Dehnhülse aufgeschoben und nachfolgend eine erste Mutter aufgeschraubt oder eine erste Schaftmutter aufgeschraubt und festgezogen wird, anschließend auf die übrigen Schraubbolzen eine zweite Dehnhülse aufgeschoben und nachfolgend eine zweite Mutter aufgeschraubt oder eine zweite Schaftmutter aufgeschraubt und festgezogen wird, wobei
entweder
die zweiten Dehnhülsen und die Schäfte der zweiten Schaftmuttern wenigstens um eine Mutternbreite länger sind, als die ersten Dehnhülsen oder die Schäfte der ersten Schaftmuttern
oder
die zweiten Muttern und Schaftmuttern einen Verlängerungskragen aufweisen, dessen Werkzeugeingriff die ersten Muttern und Schaftmuttern, die einen Verlängerungskragen geringerer Länge aufweisen können, überragt.

17. Verfahren nach Anspruch 16, **dadurch gekennzeichnet, dass** der Unterwagen einen Ringdom aufweist, mit dem der erste Lagerring verschraubt wird.

18. Verfahren nach einem der Ansprüche 15 bis 17, **dadurch gekennzeichnet, dass** der zweite der beiden Lagerringe mit dem Oberwagen derart verschraubt wird, dass zunächst erste Sechskantschrauben mit einer ersten Dehnhülse versehen werden und auf einer ersten Kreisbahn durch den Lagerring in den Oberwagen eingeschraubt und festgezogen werden, wonach zweite Sechskantschrauben mit einer zweiten Dehnhülse versehen werden und jeweils zwischen zwei ersten Sechskantschrauben auf einer zweiten, konzentrisch zur ersten verlaufenden Kreisbahn beabstandet zueinander durch den zweiten Lagerring in den Oberwagen eingeschraubt und festgezogen werden, wobei die zweiten Dehnhülsen wenigstens um eine Schraubenkopfbreite länger sind, als die ersten Dehnhülsen.

19. Verfahren nach Anspruch 18, **dadurch gekennzeichnet, dass** die Sechskantschrauben auf der ersten oder der zweiten Kreisbahn nur auf zwei diametral gegenüberliegend angeordneten Teilkreisbahnen angeordnet sind, wobei die beiden Teilkreisbahnen jeweils einen Winkel umspannen, der vorzugsweise kleiner gleich 110°, insbesondere zwischen 90° und 80° beträgt.

## Claims

1. Construction machine, in particular specialised civil engineering machine, with an upper carriage (12) carrying a leader (3), on which a carriage (4) for receiving a working implement is movably arranged, wherein the upper carriage (12) is rotatably connected to an undercarriage (11) via a slewing ring (6), wherein the slewing ring (6) comprises two bearing rings, namely an outer ring (61) and an inner ring (62), between which rolling elements are arranged, wherein one of the bearing rings (61, 62) is connected to the upper carriage (12) via screw connections arranged in the shape of a circular arc and the other bearing ring is connected to the undercarriage (11) via screw connections arranged in the shape of a circular arc, wherein the screw connections each have a screwing means with a tool engagement for tightening the screw connection with a tool, **characterised in that** the tool engagements of at least two adjacent screw connections of a bearing ring (61, 62) are arranged axially offset from one another, wherein the screw connections each comprise a screw bolt, on which a clamping body is arranged, which has the tool engagement.

2. Construction machine according to claim 1, **characterised in that** at least one bearing ring (61, 62) is connected to the upper carriage or the undercarriage via an annular arrangement of screw connections, the tool engagements of which are arranged alternately axially offset relative to one another.

3. Construction machine according to claim 2, **characterised in that** the clamping bodies arranged on the screw bolts and having the tool engagement are arranged alternately axially offset relative to one another.

4. Construction machine according to one of the previous claims, **characterised in that** at least one clamping body is a screw head integrally provided on a screw bolt of a screw (74, 75) or a nut (73) screwed onto a screw bolt (71, 72), wherein an expansion sleeve (81, 82), against which the clamping body is clamped, is respectively pushed onto the screw bolts.

5. Construction machine according to claim 2 to 4, **characterised in that** at least one clamping body is a shank nut screwed onto a screw bolt.

6. Construction machine according to one of claims 2 to 5, **characterised in that** at least one clamping body is a nut or shank nut screwed onto a screw bolt, wherein the nut or shank nut comprises an axially set extension collar, which has the tool engagement.

7. Construction machine according to one or more of claims 4 as well as 5 and 6, insofar as these refer back to claim 4, **characterised in that** the expansion sleeves (81, 82) or shank nut shanks of at least two adjacent screw bolts have a different length and/or are arranged countersunk differently and/or **in that** the extension collars of two adjacent nuts or shank nuts have a different length.

8. Construction machine according to claim 7, **characterised in that** the outer bearing ring (61) is screwed to the undercarriage via screw bolts (71, 72) with screwed-on nut (73) and expansion sleeve and/or via screw bolts (71, 72) with screwed-on shank nut.

9. Construction machine according to one of claims 4 to 8, **characterised in that** at least one bearing ring (62) is connected to the upper carriage or the undercarriage via screw bolts arranged on at least two concentric pitch circles, wherein the screw bolts arranged on a first pitch circle are each positioned offset between two screw bolts arranged on an adjacent second pitch circle, wherein the expansion sleeves (81) and the shank nut shanks of the screw bolts arranged on the first pitch circle have a shorter length relative to the expansion sleeves (82) and the shank nut shanks of the screw bolts arranged on the second pitch circle and/or are arranged recessed, whereby the clamping bodies of the screw bolts arranged on the first pitch circle are axially offset relative to the clamping bodies of the screw bolts arranged on the second pitch circle.

10. Construction machine according to one of claims 4 to 9, **characterised in that** at least one bearing ring (62) is connected to the upper carriage or the undercarriage via at least two screw bolts arranged concentrically to one another in the shape of a circular arc, wherein the screw bolts of a first circular arc-shaped arrangement are each positioned offset between two screw bolts of a second circular arc-shaped arrangement adjacent thereto, wherein the nuts and the shank nuts of the screw bolts arranged on the first pitch circle have first extension collars, which have a shorter length compared to the extension collar of the nuts and shank nuts of the screw bolts arranged on the second pitch circle, whereby the tool engagements of the nuts and shank nuts of the screw bolts arranged on the first pitch circle are arranged axially offset relative to the tool engagements of the nuts and shank nuts of the screw bolts arranged on the second pitch circle.

11. Construction machine according to one of claims 8 to 10, **characterised in that** the inner bearing ring (62) is screwed to the upper carriage via machine screws (74, 75).

12. Construction machine according to one of claims 9 to 11, **characterised in that** one of the two pitch circles consists of two pitch circle arcs arranged diametrically to one another, which each span an angle of between 50° and 30°, preferably between 45° and 35°.

13. Construction machine according to claim 12, **characterised in that** the two arcs of the pitch circle span an identical angle.

14. Construction machine according to one of claims 9 to 13, **characterised in that** the expansion sleeves (81, 82) and shank nut shanks each have an identical length on a pitch circle of arranged screw bolts.

15. Method for the rotatable connection of an upper carriage to the undercarriage of a construction machine via a slewing ring, which has an inner bearing ring and an outer bearing ring, wherein one of the bearing rings is screwed to the upper carriage (12) via screw bolts arranged in the shape of a circular arc and the other bearing ring is screwed to the undercarriage (11) via screw bolts or screws arranged in the shape of a circular arc, wherein on the screw bolts a clamping body having a tool engagement is respectively arranged, **characterised in that** firstly the screw bolt of a number of first screws is provided with a first expansion sleeve in each case and is subsequently screwed tight by turning the screw head
and/or a number of first screw bolts is screwed in, each is provided with a first expansion sleeve and a first nut is subsequently screwed on and/or a number of first screw bolts is screwed in and a first shank nut is subsequently screwed on and tightened
and subsequently the screw bolt of a number of second screws is respectively provided with a second expansion sleeve and subsequently tightened by turning the screw head
and/or a number of second screw bolts is screwed in, respectively provided with a second expansion sleeve and a second nut is subsequently screwed on
and/or a number of second screw bolts is screwed in and a second shank nut is subsequently screwed on and tightened,
wherein either the first expansion sleeves and the shanks of the first shank nuts are shorter by at least one screw head width or nut width than the second expansion sleeves and the shanks of the second shank nuts
or wherein the first and second expansion sleeves as well as the shanks of the first and second shank nuts have an identical length and either the first expansion sleeves and the shanks of the first shank nuts are recessed by at least one screw head width or nut width relative to the second expansion sleeves and the shanks of the second shank nuts or the second nuts or shank nuts have an extension collar, which axially projects beyond the first nuts, which can have an extension collar, with their tool engagement.

16. Method according to claim 15, **characterised in that** a first bearing ring is screwed to the undercarriage in such a manner that firstly screw bolts are screwed into this bearing ring on a circular path, a first expansion sleeve is pushed onto each second screw bolt and a first nut is subsequently screwed on or a first shank nut is screwed on and tightened, subsequently a second expansion sleeve is pushed onto the remaining screw bolts and a second nut is subsequently screwed on or a second shank nut is screwed on and tightened, wherein
either
the second expansion sleeves and the shanks of the second shank nuts are longer by at least one nut width than the first expansion sleeves or the shanks of the first shank nuts
or
the second nuts and shank nuts have an extension collar, the tool engagement of which projects beyond the first nuts and shank nuts, which can have an extension collar of shorter length.

17. Method according to claim 16, **characterised in that** the undercarriage has a ring dome, to which the first bearing ring is screwed.

18. Method according to one of claims 15 to 17, **characterised in that** the second of the two bearing rings is screwed to the upper carriage in such a manner that the hexagon head screws are provided at first with a first expansion sleeve and are screwed through the bearing ring into the upper carriage on a first circular path and tightened, whereupon second hexagon head screws are provided with a second expansion sleeve and are respectively screwed through the second bearing ring into the upper carriage and tightened between two first hexagon head screws on a second circular path extending concentrically to the first at a distance from one another, wherein the second expansion sleeves are longer than the first expansion sleeves by at least one screw head width.

19. Method according to claim 18, **characterised in that** the hexagon head screws are arranged on the first or the second circular path only on two diametrically oppositely arranged partial circular paths, wherein the two partial circular paths each span an angle which is preferably smaller than or equal to 110°, in particular between 90° and 80°.

## Revendications

1. Machine de construction, en particulier machine de travaux publics spéciaux, comprenant un véhicule supérieur (12) supportant une jumelle (3) contre laquelle est disposé un chariot (4) mobile servant à recevoir un appareil de travail, sachant que le véhicule supérieur (12) est relié, via une couronne rotative (6) lui permettant de tourner, avec un véhicule inférieur (11), sachant que la couronne rotative (6) présente deux anneaux servant de paliers, à savoir un anneau extérieur (61) et un anneau intérieur (62) entre lesquels sont disposés des rouleaux, sachant que l'un des anneaux servant de paliers (61, 62) est relié, via des liaisons par vis disposées en arc de cercle, avec le véhicule supérieur (12), et que l'autre anneau servant de palier est relié, via des liaisons par vis disposées en arc de cercle, avec le véhicule inférieur (11), sachant que les jonctions vissées présentent respectivement un moyen de raccordement vissé comprenant un moyen d'engrènement pour outil pour serrer fermement la jonction vissée avec un outil, **caractérisée en ce que** les moyens d'engrènement pour outil d'au moins deux jonctions vissées voisines d'un anneau servant de palier (61, 62) sont disposés mutuellement décalés axialement, sachant que les jonctions vissées comprennent chacune un goujon de vissage sur lequel est disposé un corps de serrage qui présente le moyen d'engrènement pour outil.

2. Machine de construction selon la revendication 1, **caractérisée en ce qu'**au moins un anneau servant de palier (61, 62) est relié - via une disposition en arc de cercle de jonctions vissées - avec le véhicule supérieur ou le véhicule inférieur, dont les moyens d'engrènement pour outil sont disposés mutuellement décalés en alternance axialement.

3. Machine de construction selon la revendication 2, **caractérisée en ce que** les corps de serrage disposés sur les goujons de vissage et présentant le moyen d'engrènement pour outil sont disposés mutuellement décalés en alternance axialement.

4. Machine de construction selon l'une des revendications précédentes, **caractérisée en ce qu'**au moins un corps de serrage est une tête de vis présente monobloc contre un goujon de vissage d'une vis (74, 75), ou que ce corps de serrage est un écrou (73) vissé sur un goujon de vissage (71, 72), sachant que sur les goujons de vissage est enfilée respectivement une douille de dilatation (81, 82) contre laquelle le corps de serrage est serré.

5. Machine de construction selon les revendications 2 à 4, **caractérisée en ce qu'**au moins un corps de serrage est un écrou long vissé sur un goujon de vissage.

6. Machine de construction selon l'une des revendications 2 à 5, **caractérisée en ce qu'**au moins un corps de serrage est un écrou ou un écrou long vissé sur un goujon de vissage, sachant que l'écrou ou l'écrou long comprend un col de prolongement en appui axial, lequel présente le moyen d'engrènement pour outil.

7. Machine de construction selon l'une ou plusieurs des revendications précédentes 4 ainsi que 5 et 6, dans la mesure où ces dernières se réfèrent à la revendication 4, **caractérisée en ce que** les douilles de dilatation (81, 82) ou les tubes des écrous longs d'au moins deux goujons de vissage voisins présentent une longueur différente et/ou sont disposés différemment enfoncés et/ou que les cols de prolongement de deux écrous ou écrous longs voisins présentent une longueur différente.

8. Machine de construction selon la revendication 7, **caractérisée en ce que** l'anneau extérieur (61) servant de palier est vissé - via des goujons de vissage (71, 72) avec écrou (73) vissé dessus et une douille de dilatation et/ou via des goujons de vissage (71, 72) avec écrou long vissé dessus - avec le véhicule inférieur.

9. Machine de construction selon l'une des revendications 4 à 8, **caractérisée en ce qu'**au moins un anneau (62) servant de palier est relié au véhicule supérieur ou au véhicule inférieur via des goujons de vissage disposés sur au moins deux cercles partiels réciproquement concentriques, sachant que les goujons de vissage disposés sur un premier cercle partiel sont positionnés respectivement décalés entre deux goujons de vissage disposés sur un deuxième cercle partiel voisin, sachant que les douilles de dilatation (81) et les tubes des écrous longs des goujons de vissage disposés sur le premier cercle partiel présentent une longueur inférieure aux douilles de dilatation (82) et aux tubes des écrous longs des goujons de vissage disposés sur le deuxième cercle partiel, et/ou qu'ils sont disposées enfoncés, faisant que les corps de serrage des goujons de vissage disposés sur le premier cercle partiel sont décalés axialement par rapport aux corps de serrage des goujons de vissage disposés sur le deuxième cercle partiel.

10. Machine de construction selon l'une des revendications 4 à 9, **caractérisée en ce qu'**au moins un anneau servant de palier (62) est relié - via au moins deux goujons de vissage disposés réciproquement concentriques en arc de cercle - avec le véhicule supérieur ou le véhicule inférieur, sachant que les goujons de vissage d'un premier agencement en arc de cercle sont positionnés respectivement décalés entre deux goujons de vissage d'un deuxième agencement en arc de cercle voisin du premier, sachant que les écrous et les écrous longs des goujons de vissage disposés sur le premier cercle partiel présentent des cols de prolongement, les premiers, d'une longueur inférieure à celle du col de prolongement des écrous et les écrous longs des goujons de vissage disposés sur le deuxième cercle partiel, faisant que les moyens d'engrènement pour outil des écrous et des écrous longs des goujons de vissage disposés sur le premier cercle partiel sont décalés axialement par rapport aux moyens d'engrènement pour outil des écrous et écrous longs des goujons de vissage disposés sur le deuxième cercle partiel.

11. Machine de construction selon l'une des revendications 8 à 10, **caractérisée en ce que** l'anneau intérieur (62) servant de palier est vissé contre le véhicule supérieur au moyen de vis pour machine (74, 75).

12. Machine de construction selon l'une des revendications 9 à 11, **caractérisée en ce que** l'un des deux cercles partiels se compose de deux arcs de cercle partiels diamétralement opposés l'un à l'autre, arcs qui couvrent un angle compris entre 50° et 30°, de préférence entre 45° et 35°.

13. Machine de construction selon la revendication 12, **caractérisée en ce que** les deux arcs de cercle partiels couvrent un angle identique.

14. Machine de construction selon l'une des revendications 9 à 13, **caractérisée en ce que** les douilles de dilatation (81, 82) et les tubes des écrous longs de goujons de vissage respectivement disposés sur un cercle partiel présentent une longueur identique.

15. Procédé de liaison rotative d'un véhicule supérieur avec le véhicule inférieur d'une machine de construction via une couronne rotative, couronne qui présente un anneau intérieur servant de palier et un anneau extérieur servant de palier, sachant que l'un des anneaux servant de paliers est vissé contre le véhicule supérieur (12) via des goujons de vissage disposés en arc de cercle et que l'autre anneau servant de palier est vissé contre le véhicule inférieur (11) via des goujons de vissage ou des vis disposés en arc de cercle, sachant que sur les goujons de vissage est disposé respectivement un corps de serrage présentant un moyen d'engrènement pour outil, **caractérisé en ce que** d'abord le goujon de vissage d'un certain nombre de premières vis est muni respectivement d'une première douille de dilatation et qu'ensuite il est vissé fermement en tournant la tête de vis et/ou qu'un certain nombre de premiers goujons de vissage sont vissés, respectivement munis d'une première douille de dilatation et qu'ensuite un premier écrou est vissé dessus et/ou qu'un certain nombre de premier goujons de vissage sont vissés et qu'ensuite un premier écrou long est vissé dessus et serré fermement, et qu'ensuite le goujon de vissage d'un certain nombre de deuxièmes vis est muni respectivement d'une deuxième douille de dilatation et qu'il est ensuite vissé fermement en tournant la tête de vis et/ou qu'un certain nombre de deuxièmes goujons de vissage sont vissés respectivement munis d'une deuxième douille de dilatation, et qu'ensuite un deuxième écrou est vissé dessus et/ou qu'un certain nombre de deuxièmes goujons de vissage sont vissés et qu'ensuite un deuxième écrou long est vissé dessus et serré fermement, sachant que soit les premières douilles de dilatation et les tubes des premiers écrous longs sont plus courts d'au moins une largeur de tête de vis ou une largeur d'écrou que les deuxièmes douilles de dilatation et les tubes des deuxièmes écrous longs ou sachant que les premières et les deuxièmes douilles de dilatation ainsi que les tubes des premiers et des deuxièmes écrous longs sont d'une longueur identique et que soit les premières douilles de dilatation et les tubes des premiers écrous longs sont enfoncés l'équivalent d'au moins une largeur de tête de vis ou une largeur d'écrou par rapport aux deuxièmes douilles de dilatation et aux tubes des deuxièmes écrous longs, soit les deuxièmes écrous ou écrous longs présentent un col de prolongement qui par son moyen d'engrènement pour outil dépasse axialement les premiers écrous qui peuvent présenter un col de prolongement.

16. Procédé selon la revendication 15, **caractérisé en ce qu'**un premier anneau servant de palier est vissé contre le véhicule inférieur de sorte que d'abord des goujons de vissage sont vissés sur une piste circulaire dans cet anneau servant de palier, qu'une première douille de dilatation est enfilée sur un goujon de vissage sur deux et qu'ensuite un premier écrou est vissé dessus ou un premier écrou long est vissé dessus et serré fermement, qu'ensuite une deuxième douille de dilatation est enfilée sur les goujons de vissage restants et qu'ensuite un deuxième écrou est vissé dessus ou qu'un deuxième écrou long est vissé dessus et serré fermement, sachant que soit les deuxièmes douilles de dilatation et les tubes des deuxièmes écrous longs sont plus longs d'au moins une largeur d'écrou que les premières douilles de dilatation ou les tubes des premiers écrous longs ou que les deuxièmes écrous et écrous longs présentent un col de prolongement dont le moyen d'engrènement pour outil dépasse les premiers écrous et écrous longs qui peuvent présenter un col de prolongement de moindre longueur.

17. Procédé selon la revendication 16, **caractérisé en ce que** le véhicule inférieur présente un dôme annulaire contre lequel est vissé le premier anneau servant de palier.

18. Procédé selon l'une des revendications 15 à 17, **caractérisé en ce que** le deuxième des deux anneaux servant de paliers est vissé contre le véhicule supérieur de sorte que d'abord des vis hexagonales, les premières, sont munies d'une première douille de dilatation et que sur une première piste circulaire elles sont vissées dans le véhicule supérieur à travers l'anneau servant de palier et serrées fermement, sachant qu'ensuite des vis hexagonales, les deuxièmes, sont munies d'une deuxième douille de dilatation et qu'elles sont vissées mutuellement distantes et serrées fermement entre deux premières vis hexagonales sur une deuxième piste circulaire concentrique à la première, dans le véhicule supérieur, à travers le deuxième anneau servant de palier, sachant que les deuxièmes douilles de dilatation sont plus longues d'au moins une largeur de tête de vis que les premières douilles de dilatation.

19. Procédé selon la revendication 18, **caractérisé en ce que** les vis hexagonales sur la première ou la deuxième piste circulaire sont disposées uniquement sur deux pistes circulaires partielles diamétralement opposées, sachant que les deux pistes circulaires partielles couvrent chacune un angle de préférence inférieur ou égal à 110°, en particulier compris entre 90° et 80°.
